# EUROPÄISCHE PATENTSCHRIFT

(11) **EP 2 323 776 B1**
(45) Veröffentlichungstag und Bekanntmachung des Hinweises auf die Patenterteilung: **13.11.2013**
(21) Anmeldenummer: 09778464.9
(22) Anmeldetag: 10.09.2009
(51) Int. Cl.: B05D 1/20, B05D 1/18, B05D 3/06, B05D 1/00, B05D 1/26, B82Y 30/00, B82Y 40/00

(54) **VOLLSTÄNDIG VERNETZTE CHEMISCH STRUKTURIERTE MONOSCHICHTEN**
FULLY CROSSLINKED CHEMICALLY STRUCTURED MONOLAYERS
MONOCOUCHES STRUCTURÉES CHIMIQUEMENT, COMPLÈTEMENT RÉTICULÉES

(30) Priorität: 11.09.2008 DE 102008046707
(43) Veröffentlichungstag der Anmeldung: 25.05.2011
(73) Patentinhaber: Universität Bielefeld, 33615 Bielefeld (DE)
(72) Erfinder: GÖLZHÄUSER Armin, 33615 Bielefeld (DE); BEYER, André, 33619 Bielefeld (DE); GODT, Adelheid, 55122 Mainz (DE)
(74) Vertreter: Müller-Boré & Partner Patentanwälte
(86) Internationale Anmeldenummer: PCT/EP2009/006584
(87) Internationale Veröffentlichungsnummer: WO 2010/028834

(56) Entgegenhaltungen:
- WO-A1-2007/011076
- DE-A1- 19 827 900
- DE-A1- 19 945 935
- TURCHANIN A ET AL: "High thermal stability of cross-linked aromatic self-assembled monolayers: Nanopatterning via selective thermal desorption" APPLIED PHYSICS LETTERS, AIP, AMERICAN INSTITUTE OF PHYSICS, MELVILLE, NY, US, Bd. 90, Nr. 5, 29. Januar 2007 (2007-01-29), Seiten 53102-053102, XP012095852 ISSN: 0003-6951 in der Anmeldung erwähnt
- ECK WOLFGANG ET AL: "Freestanding nanosheets from crosslinked biphenyl self-assembled monolayers" ADVANCED MATERIALS, WILEY-VCH VERLAG, WEINHEIM, DE, Bd. 17, Nr. 21, 4. November 2005 (2005-11-04), Seiten 2583-2587, XP002458834 ISSN: 0935-9648 in der Anmeldung erwähnt
- HARTMANN A ET AL: "DIRECT IMMOBILIZATION OF ANTIBODIES ON PHTHALOCYANINATO- POLYSILOXANE PHOTOPOLYMERS" THIN SOLID FILMS, ELSEVIER-SEQUOIA S.A. LAUSANNE, CH, Bd. 245, Nr. 1/02, 1. Juni 1994 (1994-06-01), Seiten 206-210, XP000453829 ISSN: 0040-6090
- TROITSKY V L ET AL: "INSTRUMENT FOR DEPOSITING LANGMUIR-BLODGETT FILMS COMPOSED OF ALTERNATING MONOLAYERS USING A PROTECTIVE LAYER OF WATER" REVIEW OF SCIENTIFIC INSTRUMENTS, AIP, MELVILLE, NY, US, Bd. 67, Nr. 12, 1. Dezember 1996 (1996-12-01), Seiten 4216-4223, XP000635882 ISSN: 0034-6748

## Beschreibung

Die vorliegende Erfindung betrifft eine strukturierte Monoschicht, die aus niedermolekularen Aromaten aufgebaut und in lateraler Richtung vollständig vernetzt ist, wobei die Monoschicht auf einer der beiden Oberflächen ein Muster aus funktionellen Gruppen aufweist, ein Verfahren zur Herstellung einer solchen strukturierten Monoschicht sowie deren Verwendung.

Oberflächen werden nach dem heutigen Stand der Technik meist durch auf darauf aufgetragene, physisorbierte dünne Flüssigkeitsfilme (z.B. Öle, Wachse) oder polymere Anstriche vor korrodierenden Einflüssen und mechanischen Belastungen durch Reibung geschützt. Diese herkömmlichen Filme besitzen üblicherweise Schichtdicken im Bereich einiger Mikrometer bis hin zu Millimetern. Ihre exakte Schichtdicke ist jedoch verfahrenstechnisch nur schwer zu kontrollieren.

Unvernetzte Monoschichten im Stand der Technik, insbesondere solche auf Basis aliphatischer Kohlenwasserstoffketten, besitzen eine geringe mechanische Stabilität und gewähren somit eine nur unzureichende Schutzwirkung. Darüber hinaus desorbieren unvernetzte Monoschichten bei Kontakt mit korrodierenden Agentien, da einzelne Moleküle an Defektstellen von der Oberfläche verdrängt werden und die Ablösung der Schicht von solchen Stellen aus fortschreitet. Übliche Verfahren zur Herstellung solcher unvernetzter Monoschichten organischer Moleküle auf verschiedenen Substraten sind beispielsweise in A. Ulman, "An Introduction to Ultrathin Films", Academic Press, Boston 1991, sowie A. Ulman, Chem. Rev. 1996, 96, 1533, näher beschrieben.

Um diese Probleme zu lösen, wurde in DE-A-199 45 935 ein oberflächenmodifiziertes Schichtsystem vorgeschlagen, das ein Substrat und, darauf mindestens teilweise angeordnet, eine über Ankergruppen kovalent an mindestens eine Oberfläche des Substrates gebundene, in lateraler Richtung vernetzte Monoschicht, die aus niedermolekularen Aromaten und/oder Heteroaromaten aufgebaut ist, umfasst. Die aus niedermolekularen Aromaten und/oder Heteroaromaten aufgebaute, in lateraler Richtung vernetzte Monoschicht dieser Schichtsysteme weist den Charakter eines quervernetzten Feststoffes auf und schützt somit die Oberflächen entsprechender Substrate vor Beschädigungen durch Reibung und Korrosion. Solche Systeme eignen sich insbesondere zum Oberflächenschutz von mechanisch bewegten Geräten mit kleinen Arbeitsabständen im Mikro- oder Nanometerbereich, wie etwa Festplattenlaufwerke zur elektronischen Datenspeicherung, oder von mikromechanischen Geräten mit bewegten Teilen mit Dimensionen im Mikrometerbereich und darunter.

Jedoch haben diese oberflächenmodifzierten Schichtsysteme den Nachteil, dass sie durch Vernetzung mittels feinfokussierter ionisierender Strahlung oder unter Verwendung von Lochmasken zwar eine laterale Strukturierung bezüglich der Vernetzung aufweisen können, eine in lateraler Richtung vernetzte Monoschicht jedoch eine gleichförmige bzw. homogene Oberfläche und somit keinerlei Oberflächenstrukturierung aufweist. Es ist daher nicht möglich, auf dieser vernetzten Oberfläche weitere Nanoobjekte in einem bestimmten Muster anzubinden.

Der vorliegenden Erfindung liegt daher die Aufgabe zugrunde, eine mechanisch stabile, zweidimensionale ultradünne Schicht aus vernetzten Aromaten und/oder Heteroaromaten bereitzustellen, auf deren Oberfläche selektiv in einem beliebigen Muster weitere Nanoobjekte, wie beispielsweise Makromoleküle, funktionalisierte Nanopartikel oder Proteine, fixiert werden können.

Diese Aufgabe wird durch die in den Ansprüchen gekennzeichneten Ausführungsformen gelöst.

Insbesondere wird eine strukturierte Monoschicht bereitgestellt, die aus niedermolekularen Aromaten aufgebaut und in lateraler Richtung vollständig vernetzt ist, wobei die Monoschicht auf einer der beiden Oberflächen ein Muster aus funktionellen Gruppen aufweist.

Im Rahmen der vorliegenden Erfindung werden unter dem Begriff "niedermolekulare Aromaten" solche aromatische Verbindungen verstanden, die nicht in oligomerer oder polymerer Form vorliegen. Dieser Begriff schließt weiterhin die Möglichkeit ein, dass die Aromaten nach Behandlung mit energiereicher Strahlung miteinander vernetzt sind. Im Rahmen der vorliegenden Erfindung schließt der Begriff "Aromaten" den Begriff "Heteroaromaten" mit ein, d.h. es werden unter dem Begriff "Aromaten" aromatische Verbindungen verstanden, die kein Heteroatom oder ein oder mehrere Heteroatome in zumindest einem aromatischen Ring enthalten. Die Monoschicht ist aus Aromaten, ausgewählt aus der Gruppe, bestehend aus Phenyl, Biphenyl, Terphenyl, Naphthalin, Anthracen, Bipyridin, Terpyridin, Thiophen, Bithienyl, Terthienyl, Pyrrol und Kombinationen davon, aufgebaut. In einer besonders bevorzugten Ausführungsform der vorliegenden Erfindung ist die Monoschicht aus Biphenyl aufgebaut. Dies ist besonders vorteilhaft hinsichtlich der Vernetzbarkeit in lateraler Richtung. Außerdem sind aus Biphenyl aufgebaute Monoschichten mechanisch äußerst stabil. Es ist aber auch möglich, dass die Monoschicht zumindest zwei verschiedenen Aromaten enthält. So kann beispielsweise ein Bereich der Monoschicht aus Biphenyl aufgebaut sein, während ein anderer Bereich der Monoschicht aus Bipyridin aufgebaut ist.

Die Monoschicht gemäß der vorliegenden Erfindung ist in lateraler Richtung vollständig vernetzt. Durch die Vernetzung in lateraler Richtung erlangt die aus den niedermolekularen Aromaten aufgebaute Monoschicht hohe mechanische und chemische Stabilität. Vorzugsweise ist die Monoschicht durch Behandlung mit Elektronenstrahlung, Plasmastrahlung, Röntgenstrahlung, β-Strahlung, γ-Strahlung, UV-Strahlung oder EUV-Strahlung ("Extremes UV", mit einem Spektralbereich zwischen etwa 1 nm und etwa 50 nm) vernetzt.

Eine der beiden Oberflächen der erfindungsgemäßen Monoschicht weist ein Muster aus funktionellen Gruppen auf. Unter einem Muster aus funktionellen Gruppen wird im Rahmen der vorliegenden Erfindung eine chemische Strukturierung der Oberfläche bezeichnet, wobei die funktionellen Gruppen diese chemische Strukturierung unter Ausbildung des gewünschten Musters auf der Oberfläche der Monoschicht darstellen. Diese Strukturierung bzw. dieses Muster wird durch teilweise Funktionalisierung der Oberfläche mit funktionellen Gruppen erhalten. Insbesondere kann auf diese Weise eine Monoschicht mit einem zielgerichteten Muster aus funktionellen Gruppen erhalten werden. Dabei sind die funktionellen Gruppen jeweils an die Aromaten gebunden. Im Gegensatz dazu können die Beschichtungssysteme aus dem Stand der Technik lediglich eine vollständige Belegung durch funktionelle Gruppen ohne Ausbildung eines Musters aufweisen. Es ist zwar auch möglich, dass die Beschichtungssysteme aus dem Stand der Technik eine chemisch strukturierte Oberfläche mit einem Muster aus funktionellen Gruppen aufweisen. In diesem Fall ist die Monoschicht aber nicht vollständig in lateraler Richtung vernetzt, was den Nachteil einer verminderten mechanischen Stabilität aufweist.

Die funktionellen Gruppen können alle funktionellen Gruppen sein, die durch die Bestrahlung nicht abgespalten werden, und die zur weiteren Umsetzung geeignet sind, beispielsweise um weitere Moleküle an die Monoschicht anzubinden. Vorzugsweise sind die funktionellen Gruppen aus Aminogruppen, Nitrogruppen, Carboxygruppen, Cyanogruppen, Thiolgruppen, Hydroxygruppen und Kombinationen davon ausgewählt. Besonders bevorzugt weist die Monoschicht auf einer der beiden Oberflächen ein Muster aus Aminogruppen als funktionelle Gruppen auf.

Die Aromaten in den Bereichen, in denen das Muster ausgebildet ist, können mit den Aromaten in den Bereichen, in denen das Muster nicht ausgebildet ist, identisch oder verschieden sein.

In Abhängigkeit von dem verwendeten Aromaten kann die erfindungsgemäße Monoschicht jede geeignete Dicke aufweisen. Bevorzugt weist die erfindungsgemäße Monoschicht eine Schichtdicke im Bereich von 0,1 nm bis 10 nm auf, besonders bevorzugt im Bereich von 0,3 nm bis 3 nm.

In einer weiteren bevorzugten Ausführungsform der vorliegenden Erfindung ist die Oberfläche der Monoschicht, die kein Muster aus funktionellen Gruppen aufweist, über Ankergruppen kovalent an mindestens eine Oberfläche eines Substrates gebunden. In diesem Fall liegt die Monoschicht nicht frei beispielsweise in der Form einer Folie vor, sondern ist an ein Substrat gebunden und stellt somit eine Beschichtung bzw. einen Überzug dar. Im Gegensatz zu den herkömmlichen Beschichtungssystemen, z.B. auf Basis physisorbierter dünner Flüssigkeitsfilme oder polymerer Anstriche, ist die Dicke der erfindungsgemäßen Monoschicht aufgrund der räumlichen Ausdehnung der über Ankergruppen kovalent an die Substratoberfläche gebundenen Moleküle, welche die in lateraler Richtung vernetzte Monoschicht aufbauen, exakt kontrollierbar bzw. einstellbar. Durch die kovalente Bindung an das Substrat verleiht die Monoschicht dem Substrat hohe mechanische und chemische Stabilität und schützt die Substratoberfläche somit wirksam vor Beschädigung durch Reibung oder korrodierende Agentien.

Das erfindungsgemäß verwendete Substrat weist zumindest eine Oberfläche auf und kann aus jedem geeigneten Material bestehen. Vorzugsweise ist das Substrat aus der Gruppe, bestehend aus Gold, Silber, Titan, Zirkonium, Vanadium, Chrom, Mangan, Wolfram, Molybdän, Platin, Aluminium, Eisen, Stahl, Silicium, Germanium, Indiumphosphid, Galliumarsenid, Siliciumnitrid und Oxiden oder Legierungen oder Mischungen derselben sowie Indium-Zinn-Oxid (ITO) und Silikat- oder Boratgläsern, ausgewählt. Besonders bevorzugt ist das Substrat mit Gold beschichtetes Silicium, das zwischen Silicium und Goldschicht noch eine Titangrundierung aufweist.

Wenn die Oberfläche des Substratmaterials atomar flach und homogen vorliegt, d.h. dass sie beispielsweise keine Stufenversetzungen oder Defekte aufweist, so ist auch die Schutzschicht atomar flach, homogen und defektfrei und bildet einen nahezu ideal glatten Schutzfilm auf der zu schützenden Substratoberfläche. Die Schutzschicht paßt sich der Morphologie des Substrats in nahezu idealer Weise an. Auf diese Weise lassen sich auch Objekte mit dreidimensionalen Oberflächenmorphologien mit einer vernetzten Schutzschicht definierter Dicke bedecken.

Die erfindungsgemäßen Monoschichten können auch elektrische Leitfähigkeit mittels Durchtritt von Elektronen oder Löchern zeigen. Dies ermöglicht die Nutzung der erfindungsgemäßen Monoschichten in Geräten, bei denen der Ladungsdurchtritt durch die Oberfläche durch eine stabile Schutzschicht kontrolliert werden soll, wie beispielsweise in beschichteten elektronischen Bauelementen oder Elektroden.

Als Ankergruppen können alle Gruppen dienen, die geeignet sind, die niedermolekularen Aromaten kovalent an ein Substrat zu binden. Vorzugsweise sind die Ankergruppen aus der Gruppe, bestehend aus Carboxy-, Thiol-, Trichlorsilyl-, Trialkoxysilyl-, Phosphonat-, Hydroxamsäure- und Phosphatgruppen, ausgewählt. In einer besonders bevorzugten Ausführungsform ist die Ankergruppe eine Thiolgruppe. In einer bevorzugten Ausführungsform der vorliegenden Erfindung sind die Ankergruppen mit Hilfe eines Abstandshalters mit einer Länge von 1 bis zu 10 Methylengruppen an die in lateraler Richtung vernetzte, aus niedermolekularen Aromaten aufgebaute Monoschicht kovalent gebunden.

Die Natur der Ankergruppe ist an das jeweilige Substratmaterial anzupassen, wie es für einen Fachmann bekannt ist. Beispielsweise eignen sich für oxidierte Siliciumoberflächen insbesondere Trichlor- oder Trialkoxysilane, wie z.B. Trimethoxysilan, Triethoxysilan, etc., als Ankergruppen. Für hydrierte Silciumoberflächen können Alkoholgruppen zur Verankerung eingesetzt werden. Für Gold- und Silberoberflächen kommen z.B. Thiolgruppen als Ankergruppen in Frage, für oxidierte Metalloberflächen, wie Eisen oder Chrom, sind Phosphonsäuren, Carbonsäuren oder Hydroxamsäuren geeignet.

In einer besonders bevorzugten Ausführungsform der vorliegenden Erfindung umfaßt die strukturierte Monoschicht eine aus Biphenyl-Einheiten aufgebaute Monoschicht, die über Thiolgruppen als Ankergruppen an die entsprechende Substratoberfläche, wie z.B. Gold- oder Silberoberflächen, kovalent gebunden ist.

In einer weiteren bevorzugten Ausführungsform kann die erfindungsgemäße Monoschicht in den Bereichen, in denen die Oberfläche kein Muster aus funktionellen Gruppen aufweist, weitere funktionelle Gruppen, ausgewählt aus Halogenatomen, Carboxy-, Trifluormethyl-, Cyano-, Thiol-, Hydroxy- oder Carbonylgruppen, tragen, sofern diese von den funktionellen Gruppen, die das Muster bilden, verschieden sind. Damit wird eine strukturierte Monoschicht bereitgestellt, deren Oberfläche eine vollständige Belegung mit funktionellen Gruppen aufweist, wobei das Muster durch funktionelle Gruppen einer Sorte gebildet wird, während der Rest der Oberfläche eine davon verschiedene Sorte funktioneller Gruppen aufweist.

Die vorliegende Erfindung betrifft ferner ein Verfahren zum Herstellen einer strukturierten Monoschicht, die aus niedermolekularen Aromaten aufgebaut und in lateraler Richtung vollständig vernetzt ist, wobei die Monoschicht auf einer der beiden Oberflächen ein Muster aus funktionellen Gruppen aufweist, wobei das Verfahren die Schritte umfasst:
(a) das Bereitstellen eines Substrates,
(b) gegebenenfalls das Modifizieren mindestens einer Oberfläche des Substrates,
(c) das Aufbringen einer Monoschicht aus niedermolekularen Aromaten unter Bindung über Ankergruppen auf mindestens eine, gegebenenfalls modifizierte Oberfläche des Substrates,
(d) das Behandeln des in Schritt (c) erhaltenen Substrates mit energiereicher Strahlung derart, dass die aus niedermolekularen Aromaten aufgebaute Monoschicht in lateraler Richtung in bestimmten Bereichen selektiv unter Ausbildung eines Musters vernetzt wird, wodurch eine Monoschicht mit vernetzten und unvernetzten Bereichen gebildet wird,
(e) das Behandeln des in Schritt (d) erhaltenen Substrates mit niedermolekularen Aromaten, die mindestens eine funktionelle Gruppe aufweisen, derart, dass ein Austausch der unvernetzten niedermolekularen Aromaten gegen niedermolekulare Aromaten, die mindestens eine funktionelle Gruppe aufweisen, stattfindet, und
(f) das Behandeln des in Schritt (e) erhaltenen Substrates mit energiereicher Strahlung derart, dass eine Vernetzung der ausgetauschten Aromaten, die mindestens eine funktionelle Gruppe aufweisen, untereinander sowie mit den in Schritt (d) vernetzten Aromaten stattfindet.

Das in Schritt (a) bereitzustellende Substrat weist zumindest eine Oberfläche auf und kann aus jedem geeigneten Material bestehen. Vorzugsweise ist das Substrat aus der Gruppe, bestehend aus Gold, Silber, Titan, Zirkonium, Vanadium, Chrom, Mangan, Wolfram, Molybdän, Platin, Aluminium, Eisen, Stahl, Silicium, Germanium, Indiumphosphid, Galliumarsenid, Siliciumnitrid und Oxiden oder Legierungen oder Mischungen derselben sowie Indium-Zinn-Oxid (ITO) und Silikat- oder Boratgläsern, ausgewählt. Besonders bevorzugt ist das Substrat mit Gold beschichtetes Silicium, das zwischen Silicium und Goldschicht noch eine Titangrundierung aufweist.

Um nachfolgend eine Monoschicht aus niedermolekularen Aromaten über Ankergruppen kovalent an das Substrat zu binden, kann die Substratoberfläche in Schritt (b) des erfindungsgemäßen Verfahrens zuvor gegebenenfalls modifiziert werden. Die Modifizierung kann beispielsweise eine chemische Modifizierung und/oder eine Reinigung umfassen. Die Reinigung kann durch einfaches Abspülen der Oberfläche mit Wasser oder organischen Lösungsmitteln wie Ethanol, Aceton oder Dimethylformamid oder durch Behandlung mit einem durch UV-Strahlung erzeugten Sauerstoff-Plasma erfolgen. Besonders bevorzugt erfolgt zunächst eine Behandlung mit UV-Strahlung, gefolgt vom Abspülen mit Ethanol und abschließendem Trocknen in einem Stickstoffstrom. Wenn die Monoschichten mit Ankergruppen wie Phosphonsäure-, Carbonsäure- oder Hydroxamsäuregruppen auf oxidierten Metalloberflächen aufgebracht werden sollen, ist eine vorherige kontrollierte Oxidation der Metalloberfläche vorteilhaft. Diese kann durch Behandlung der Metalloberfläche mit oxidierenden Agentien wie Wasserstoffperoxid, Caro'scher Säure oder Salpetersäure erfolgen. Eine weitere Möglichkeit zur Modifizierung einer Substratoberfläche besteht im Aufbringen einer ersten organischen Monoschicht mit terminalen reaktiven Gruppen wie Amino-, Hydroxy-, Chlor-, Brom-, Carboxy-, oder Isocyanatgruppen, an die in einem zweiten Schritt die eigentlich zu vernetzende Monoschicht mittels geeigneter funktioneller Gruppen chemisch angekoppelt wird.

Anschließend wird in Schritt (c) des erfindungsgemäßen Verfahrens eine Monoschicht aus niedermolekularen Aromaten unter Bindung über Ankergruppen auf mindestens eine, gegebenenfalls modifizierte Oberfläche des Substrates, aufgebracht. Vorzugsweise wird die Monoschicht unter kovalenter Bindung über Ankergruppen auf die Oberfläche des Substrates aufgebracht. Das Aufbringen der Monoschicht kann beispielsweise durch Tauch-, Gieß-, Spinschleuderverfahren oder durch Adsorption aus Lösung erfolgen. Derartige Verfahren sind im Stand der Technik bekannt. Vorzugsweise wird eine Monoschicht aus Aromaten, ausgewählt aus der Gruppe, bestehend aus Phenyl, Biphenyl, Terphenyl, Naphthalin, Anthracen, Bipyridin, Terpyridin, Thiophen, Bithienyl, Terthienyl, Pyrrol und Kombinationen davon, aufgebracht. In einer besonders bevorzugten Ausführungsform der vorliegenden Erfindung handelt es sich bei dem Aromaten um Biphenyl, das über eine Thiolgruppe an das Substrat kovalent gebunden wird.

Im Rahmen der vorliegenden Erfindung werden unter dem Begriff "Aromaten, die mindestens eine funktionelle Gruppe aufweisen" solche Aromaten verstanden, die mindestens eine funktionelle Gruppe aufweisen. Die funktionelle Gruppe kann jede funktionelle Gruppe sein, die durch die nachfolgende Bestrahlung nicht abgespalten wird, und die zur weiteren Umsetzung geeignet ist, beispielsweise um weitere Moleküle an die Monoschicht anzubinden. Vorzugsweise sind die funktionellen Gruppen aus Aminogruppen, Nitrogruppen, Carboxygruppen, Cyanogruppen, Thiolgruppen, Hydroxygruppen und Kombinationen davon ausgewählt. Besonders bevorzugt ist die funktionelle Gruppe eine Nitrogruppe. In einer weiteren bevorzugten Ausführungsform der vorliegenden Erfindung weisen die niedermolekulare Aromaten die funktionelle Gruppe in einer terminalen Position derart auf, dass sich die funktionellen Gruppen nach Bildung der Monoschicht auf deren Oberfläche befinden.

Im Gegensatz dazu werden im Rahmen der vorliegenden Erfindung unter dem Begriff "Aromaten" solche Aromaten verstanden, die keine funktionelle Gruppe aufweisen oder die mindestens eine funktionelle Gruppe aufweisen, welche aus Halogenatomen, Carboxy-, Trifluormethyl-, Cyano-, Thiol-, Hydroxy- oder Carbonylgruppen ausgewählt ist, sofern diese von den vorstehend genannten funktionellen Gruppen, die das Muster bilden, verschieden ist. Es ist jedoch bevorzugt, dass diese Aromaten keine funktionellen Gruppen aufweisen und lediglich unsubstituierte Aromaten darstellen.

In Schritt (d) des erfindungsgemäßen Verfahrens wird das in Schritt (c) erhaltene Substrat mit energiereicher Strahlung derart behandelt, dass die aus niedermolekularen Aromaten aufgebaute Monoschicht in lateraler Richtung in bestimmten Bereichen selektiv unter Ausbildung eines Musters vernetzt wird. Dadurch wird eine Monoschicht mit vernetzten und unvernetzten Bereichen gebildet. Vorzugsweise wird die Monoschicht kovalent in lateraler Richtung vernetzt. Bei diesem Verfahrensschritt wird selektiv nur ein bestimmter Bereich der Monoschicht bestrahlt, um so nur diesen Bereich in lateraler Richtung zu vernetzten. Auf diese Art und Weise wird eine Strukturierung bzw. ein Muster auf der Oberfläche der Monoschicht erhalten. Der nicht bestrahlte Bereich bleibt dagegen nicht vernetzt. Vorzugsweise erfolgt die Behandlung durch Elektronenstrahlung, Plasmastrahlung, Röntgenstrahlung, β-Strahlung, γ-Strahlung, UV-Strahlung oder EUV-Strahlung.

Das selektive Vernetzen kann beispielsweise unter Bildung einer Strukturierung mittels feinfokussierter ionisierender Elektronen-, Ionen- oder Photonenstrahlung durchgeführt werden. Die Fokussierung und das Rastern des Strahls über die zu strukturierenden Bereiche kann durch elektronenoptische oder ionenoptische Elemente geschehen, wie beispielsweise bei der Elektronenstrahllithographie mit Rasterelektronenmikroskopen oder der Lithographie mit fokussierten Ionen (FIB). Vorzugsweise erfolgt die selektive Bestrahlung mittels Elektronenlithographie, Röntgenlithographie oder EUV-Lithographie. Vorzugsweise kann die Strukturierung auch mittels Nahsondenverfahren durchgeführt werden. Die Fokussierung von Elektronen, Ionen oder Photonen ist bei diesen durch die Kleinheit der Elektronen-, Ionen- oder Photonenquelle (Nahsonde) gewährleistet. Die Nahsonde wird dann in Abständen zwischen 0,1 und 1000 nm über die zu strukturierenden Bereiche geführt. Als Nahsonde für Elektronen eignen sich insbesondere die Spitzen von Rastertunnelmikroskopen (STM), Rasterkraftmikroskopen (AFM) und atomar definierte Feldemitterspitzen, die z.B. nach dem in Müller et al., Ultramicroscopy 1993, 50, 57 beschriebenen Verfahren hergestellt wurden. Letztere eignen sich besonders als Nahsonden zur Strukturierung bei größeren Abständen (> 10 nm) zwischen Sonde und Probe und können auch als Quellen für Feldionen verwendet werden. Zur Strukturierung mit Photonen eignen sich feine Spitzen aus Glas oder einem anderen photonenleitenden Material, wie sie in optischen Nahfeldmikroskopen (SNOM) verwendet werden. Bei allen Nahsondenverfahren wird die Nahsonde mittels einer Positioniereinheit, z. B. aus piezokeramischen Elementen, direkt über die zu belichtenden Bereiche plaziert. In einer besonders bevorzugten Ausführungsform erfolgt das selektive Vernetzen durch ein Nahsondenverfahren, ausgewählt aus der Gruppe, bestehend aus STM, AFM und SNOM.

In einer weiteren bevorzugten Ausführungsform des erfindungsgemäßen Verfahrens wird das Behandeln mit energiereicher Strahlung unter Verwendung einer Lochmaske derart durchgeführt, dass nur räumlich definierte Bereiche der auf der Substratoberfläche aufgebrachten Monoschicht bestrahlt werden, wodurch eine strukturierte Oberfläche auf dem Substrat entsteht. Zur Vernetzung mit lateraler Strukturierung mittels elektromagnetischer Strahlung (z.B. Röntgenstrahlung, UV-Strahlung, EUV-Strahlung) bieten sich im Stand der Technik verfügbare Lichtquellen in Verbindung mit für den jeweiligen Wellenlängenbereich geeigneten Masken oder das Abrastern mittels geeigneter Lichtleiter an. In einer weiteren bevorzugten Ausführungsform des erfindungsgemäßen Verfahrens erfolgt die Strukturierung durch eine großflächig ausleuchtende Elektronenquelle in Verbindung mit einer Lochmaske, so dass nur die offenen Bereiche den Elektronen ausgesetzt werden.

In Schritt (e) des erfindungsgemäßen Verfahrens erfolgt das Behandeln des in Schritt (d) erhaltenen Substrates mit niedermolekularen Aromaten, die mindestens eine funktionelle Gruppe aufweisen, derart, dass ein Austausch der unvernetzten niedermolekularen Aromaten gegen niedermolekulare Aromaten, die mindestens eine funktionelle Gruppe aufweisen, stattfindet. In einer bevorzugten Ausführungsform weisen die in Schritt (e) verwendeten niedermolekularen Aromaten im Gegensatz zu den in Schritt (c) verwendeten niedermolekularen Aromaten mindestens eine funktionelle Gruppe auf. In einer anderen bevorzugten Ausführungsform weisen sowohl die in Schritt (e) verwendeten niedermolekularen Aromaten als auch die in Schritt (c) verwendeten niedermolekularen Aromaten mindestens eine funktionelle Gruppe auf, wobei diese funktionellen Gruppen jedoch verschieden sind. Auf diese Weise wird auf der Oberfläche der strukturierten Monoschicht ebenfalls ein Muster bereitgestellt.

Das Behandeln kann beispielsweise durch Tauch-, Gieß-, Spinschleuderverfahren oder durch Adsorption aus Lösung erfolgen. Vorzugsweise handelt es sich bei der Lösung um eine verdünnte Lösung. In einer anderen bevorzugten Ausführungsform der vorliegenden Erfindung erfolgt das Behandeln durch Adsorption aus der Gasphase. Vorzugsweise liegen die in Schritt (e) verwendeten niedermolekularen Aromaten, die mindestens eine funktionelle Gruppe aufweisen, im Überschuss in Bezug auf die auf dem Substrat vorliegenden, auszutauschenden unvernetzten Aromaten vor, um so den Austausch der unvernetzten Aromaten zu erleichtern. So wird vorzugsweise die in Schritt (d) selektiv vernetzte Monoschicht in eine hochkonzentrierte Lösung anderer funktionalisierter Aromaten eingelegt, um den Austausch durchzuführen. Für den Austausch werden vorzugsweise Aromaten, ausgewählt aus der Gruppe, bestehend aus Phenyl, Biphenyl, Terphenyl, Naphthalin, Anthracen, Bipyridin, Terpyridin, Thiophen, Bithienyl, Terthienyl, Pyrrol und Kombinationen davon, verwendet. Diese Aromaten weisen jeweils mindestens eine funktionelle Gruppe als Substituenten auf. Die Aromaten können, abgesehen von der funktionellen Gruppe, gleich oder verschieden wie die in Schritt (c) verwendeten Aromaten sein. In einer besonders bevorzugten Ausführungsform der vorliegenden Erfindung wird für den Austausch 4'-Nitrobiphenyl-4-thiol verwendet, wobei die Anbindung an die Substratoberfläche über die Thiolgruppe erfolgt. Der Mechanismus des Austausches ist beispielsweise in A. Turchanin et al., Appl. Phys. Lett. 2007, 90, 053102 beschrieben.

In Schritt (f) des erfindungsgemäßen Verfahrens erfolgt das Behandeln des in Schritt (e) erhaltenen Substrates mit energiereicher Strahlung derart, dass eine Vernetzung der ausgetauschten Aromaten, die mindestens eine funktionelle Gruppe aufweisen, untereinander sowie mit den in Schritt (d) vernetzten Aromaten stattfindet.

In einer bevorzugten Ausführungsform kann, wie vorstehend für Schritt (d) beschrieben, eine selektive Bestrahlung der zuvor nicht bestrahlten Bereiche durchgeführt werden. In einer anderen bevorzugten Ausführungsform erfolgt die Bestrahlung in diesem Schritt großflächig, d.h. die gesamte Fläche des Substrates wird bestrahlt. Vorzugsweise erfolgt die Behandlung durch Elektronenstrahlung, Plasmastrahlung, Röntgenstrahlung, β-Strahlung, γ-Strahlung, UV-Strahlung oder EUV-Strahlung.

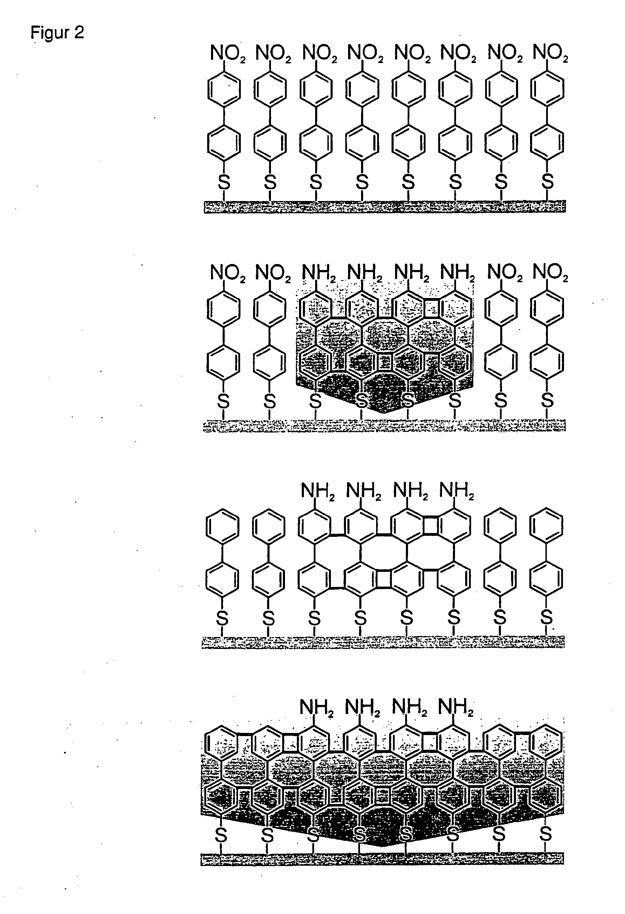

In einer bevorzugten Ausführungsform des erfindungsgemäßen Verfahrens kann zur Bestrahlung mit Elektronen eine großflächig ausleuchtende Elektronenquelle, z. B. eine "flood gun" oder ein Aufbau, wie in Abb. 2 von Hild et al., Langmuir 1998, 14, 342-346, beschrieben, verwendet werden. Die verwendeten Elektronenenergien können dabei in einem großen Bereich, vorzugsweise 1 bis 1000 eV, den jeweiligen organischen Filmen und ihren Substraten angepaßt werden. Beispielsweise kann zur Vernetzung von Biphenyl-4-thiol auf Gold Elektronenstrahlung mit 50 eV verwendet werden.

Zur großflächigen Vernetzung mittels elektromagnetischer Strahlung (z.B. Röntgenstrahlung, UV-Strahlung, EUV-Strahlung) können im Stand der Technik verfügbare Lichtquellen verwendet werden.

Werden in Schritt (c) und/oder (e) anstelle einer Monoschicht aus niedermolekularen Aromaten beispielsweise gesättigte, kovalent mittels einer Ankergruppe an der Substratoberfläche gebundene Moleküle bzw. Einheiten wie Cyclohexyl, Bicyclohexyl, Tercyclohexyl, partiell oder vollständig hydrierte Naphthaline oder Anthracene oder partiell oder vollständig hydrierte Heteroaromaten aufgebracht, so kann im Wege der Behandlung mit energiereicher Strahlung in den Schritten (d) und (f) neben der Vernetzung in lateraler Richtung eine Dehydrierung zu den entsprechenden Aromaten bzw. Heteroaromaten erfolgen.

Gemäß einer bevorzugten Ausführungsform des erfindungsgemäßen Verfahrens handelt es sich bei den funktionellen Gruppen um Nitrogruppen. In diesem Fall erfolgt durch die Bestrahlung des Substrates mit energiereicher Strahlung in Schritt (f) weiter eine Umwandlung der Nitrogruppen zu Aminogruppen. Es wird angenommen, dass dieser Reduktion zunächst eine C-H-Bindungsspaltung in den Aromaten vorangeht, und die frei gewordenen Wasserstoffatome anschließend die Nitrogruppen zu Aminogruppen reduzieren.

In einer weiteren bevorzugten Ausführungsform kann die durch das erfindungsgemäße Verfahren erhaltene Monoschicht in den Bereichen, in denen die Oberfläche kein Muster aus funktionellen Gruppen aufweist, weitere funktionelle Gruppen, ausgewählt aus Halogenatomen, Carboxy-, Trifluormethyl-, Cyano-, Thiol-, Hydroxy- oder Carbonylgruppen, tragen, sofern diese von den funktionellen Gruppen, die das Muster bilden, verschieden sind. Dazu können in Schritt (c) des erfindungsgemäßen Verfahrens Aromaten verwendet werden, die zumindest eine dieser anderen funktionellen Gruppen aufweisen.

In Abhängigkeit von dem verwendeten Aromaten kann die erfindungsgemäße Monoschicht jede geeignete Dicke aufweisen. Vorzugsweise weist die erfindungsgemäße Monoschicht eine Schichtdicke im Bereich von 0,1 nm bis 10 nm auf, besonders bevorzugt im Bereich von 0,3 nm bis 3 nm.

In einer bevorzugten Ausführungsform umfasst das erfindungsgemäße Verfahren nach dem Schritt (f) weiter den Schritt (g) des Entfernens des Substrates, um eine strukturierte Monoschicht zu erhalten, die nicht an ein Substrat gebunden vorliegt. Dies kann beispielsweise erfolgen, indem das Substrat durch Wegätzen aufgelöst wird, oder indem die Bindung zwischen Monoschicht und Substrat über die Ankergruppe chemisch gelöst wird. Entsprechende Verfahren zum Entfernen des Substrates von der Monoschicht sind im Stand der Technik bekannt. Bei Verwendung einer Thiolgruppe als Ankergruppe kann dies beispielsweise durch Behandlung mit Iod erfolgen (vgl. beispielsweise W. Eck et al., Adv. Mater. 2005, 17, 2583 - 2587).

Nach Entfernung des Substrats liegt die strukturierte Monoschicht nicht in der Form einer Beschichtung, sondern beispielsweise in der Form einer Folie oder in der Form einer Membran vor. Es ist insbesondere möglich, die Monoschicht als chemisch strukturierte Nanomembran von der Substratoberfläche abzulösen.

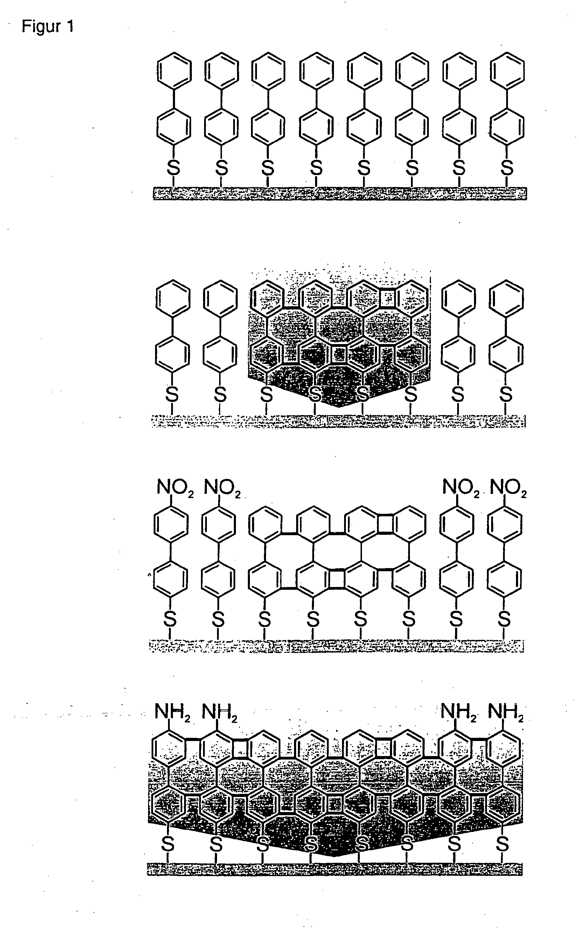

Eine bevorzugte Ausführungsform des erfindungsgemäßen Verfahrens wird in Figur 1 näher erläutert. Dabei wird zunächst eine Substratoberfläche durch Behandlung mit Biphenyl-4-thiol mit einer Monoschicht beschichtet und diese durch Elektronenbeschuss selektiv unter Bildung einer Strukturierung vernetzt. Es folgt ein Austausch der unvernetzten Biphenyl-4-thiole gegen 4'-Nitrobiphenyl-4-thiole. Eine zweite Bestrahlung führt zur chemischen Umwandlung der Nitrogruppen in Aminogruppen, zur Vernetzung der ausgetauschten Bereiche und zur Verbindung mit den bei der ersten Bestrahlung vernetzten Bereichen.

Die vorliegende Erfindung betrifft ferner ein Verfahren zum Herstellen einer strukturierten Monoschicht, die aus niedermolekularen Aromaten aufgebaut und in lateraler Richtung vollständig vernetzt ist, wobei die Monoschicht auf einer der beiden Oberflächen ein Muster aus funktionellen Gruppen aufweist, wobei das Verfahren die Schritte umfasst:
(a) das Bereitstellen eines Substrates,
(b) gegebenenfalls das Modifizieren mindestens einer Oberfläche des Substrates,
(c) das Aufbringen einer Monoschicht aus niedermolekularen Aromaten, die mindestens eine funktionelle Gruppe aufweisen, unter Bindung über Ankergruppen auf mindestens eine, gegebenenfalls modifizierte Oberfläche des Substrates,
(d) das Behandeln des in Schritt (c) erhaltenen Substrates mit energiereicher Strahlung derart, dass die aus niedermolekularen Aromaten aufgebaute Monoschicht in lateraler Richtung in bestimmten Bereichen selektiv unter Ausbildung eines Musters vernetzt wird, wodurch eine Monoschicht mit vernetzten und unvernetzten Bereichen gebildet wird,
(e) das Behandeln des in Schritt (d) erhaltenen Substrates mit niedermolekularen Aromaten derart, dass ein Austausch der unvernetzten niedermolekularen Aromaten, die mindestens eine funktionelle Gruppe aufweisen, gegen niedermolekulare Aromaten stattfindet, und
(f) das Behandeln des in Schritt (e) erhaltenen Substrates mit energiereicher Strahlung derart, dass eine Vernetzung der ausgetauschten Aromaten untereinander sowie mit den in Schritt (d) vernetzten Aromaten, die mindestens eine funktionelle Gruppe aufweisen, stattfindet.

Dieses Verfahren führt ebenso wie das zuvor dargestellte erfindungsgemäße Verfahren strukturierten Monoschichten, wobei die Reihenfolge der Verfahrensschritte etwas verändert wurde. Bei diesem Verfahren wird zunächst in Schritt (c) eine Monoschicht aus niedermolekularen Aromaten, die mindestens eine funktionelle Gruppe aufweisen, aufgebracht, und erst dann erfolgt in Schritt (e) ein Austausch der unvernetzten Aromaten, die mindestens eine funktionelle Gruppe aufweisen, gegen niedermolekulare Aromaten. Jedoch hat das zuletzt genannte Verfahren den Vorteil, dass bei Verwendung Nitrogruppen als funktionelle Gruppen der Austausch in Schritt (e) des Verfahrens um etwa das Dreifache schneller erfolgt und somit der Herstellungsprozess schneller verläuft.

Eine bevorzugte Ausführungsform dieses erfindungsgemäßen Verfahrens wird in Figur 2 näher erläutert. Dabei wird zunächst eine Substratoberfläche durch Behandlung mit 4'-Nitrobiphenyl-4-thiol mit einer Monoschicht beschichtet und diese durch Elektronenbeschuss selektiv unter Bildung einer Strukturierung vernetzt. Dabei erfolgt auch eine chemische Umwandlung der Nitrogruppen in Aminogruppen. Es folgt ein Austausch der unvernetzten 4'-Nitrobiphenyl-4-thiole gegen Biphenyl-4-thiole. Auch hier führt eine zweite Bestrahlung zur Vernetzung der ausgetauschten Bereiche und zur Verbindung mit den bei der ersten Bestrahlung vernetzten Bereichen.

Die vorliegende Erfindung betrifft ferner die Verwendung der erfindungsgemäßen strukturierten Monoschicht als Membran. In diesem Fall liegt die Monoschicht nicht an ein Substrat gebunden vor. Durch die vollständig vernetzten, chemisch strukturierten Schichten erweitern sich die Anwendungsmöglichkeiten von vernetzten monomolekularen Membranen (auch als "Nanosheets" bezeichnet), die beispielsweise in W. Eck et al., Adv. Mater. 2005, 17, 2583 - 2587 beschrieben sind. Insbesondere können die Membranen durch das erfindungsgemäße Verfahren chemisch strukturiert hergestellt werden und sind somit unmittelbar als Objektträger in der Transmissionselektronenmikroskopie und Röntgenmikroskopie zur lokalisierten Immobilisierung von Molekülen und Zellen, sowie als Objektträger in der Röntgenmikroskopie durch Digitale In-Line Holographie (DIH) zur lokalisierten Immobilisierung von Molekülen und Zellen einsetzbar.

Darüber hinaus können die erfindungsgemäßen, vollständig vernetzten, chemisch strukturieren Monoschichten bei der Herstellung von Nano-Mikrophonen, Nano-Elektromechanischen Systemen (NEMS) mit Nanosheet, Objekten mit freistehenden Nanosheets, Abdeckungen von Öffnungen in beliebigen Materialien mit freistehenden Nanosheets, Beschichtungen beliebiger Materialien mit vernetzten Schichten, Korrosionsschutz mit vernetzten Schichten, Templaten für Biochips zur lokalisierten Anbindung einzelner Proteine, Herstellung von Nano-Biochips auf beliebigen Substraten sowie zur Übertragung strukturierter, selbst-aggregierender Monoschichten (wie beispielsweise Nanobänder oder Nanokreise) eingesetzt werden.

Die erfindungsgemäße Monoschicht stellt somit eine mechanisch stabile, zweidimensionale ultradünne Schicht aus vernetzten Aromaten bereit, auf deren Oberfläche Muster aus funktionellen Gruppen vorhanden sind, die zur Anbindung von Nanoobjekten geeignet sind. Die Dimensionen dieser Muster können beliebig vom makroskopischen bis in den Nanometerbereich variiert werden.

Die vorliegende Erfindung betrifft daher weiter die Verwendung der erfindungsgemäßen strukturieren Monoschicht zur selektiven Anbindung von Nanoobjekten über die funktionellen Gruppen der Monoschicht. Bei den Nanoobjekten kann es sich um alle geeigneten Objekte bzw. Moleküle handeln, die über eine funktionelle Gruppe an die Monoschicht angebunden werden können. Vorzugsweise handelt es sich bei den Nanoobjekten um Makromoleküle, funktionalisierte Nanopartikel oder Proteine. Besonders bevorzugt werden als Nanoobjekte zur Anbindung Proteine, Antikörper, Goldnanoteilchen, DNA, Polymerkügelchen und/oder Farbstoffmoleküle verwendet. Dabei ist besonders bevorzugt, dass es sich bei den funktionellen Gruppen um Aminogruppen handelt.
Figur 1 zeigt eine bevorzugte Ausführungsform des erfindungsgemäßen Verfahrens.
Figur 2 zeigt eine andere bevorzugte Ausführungsform des erfindungsgemäßen Verfahrens.

Die vorliegende Erfindung wird durch die nachstehenden, nicht-beschränkenden Beispiele weiter erläutert.

### Beispiele

Es wurden beide erfindungsgemäßen Verfahren zur Herstellung von strukturierten Monoschichten wie folgt angewendet:

Substrat: Als Substrat wurde Silicium mit einer Titangrundierung (9 nm) und einer Goldschicht von 30 nm verwendet, welches von G. Albert PVD (Silz, Deutschland) erhalten wurde. Das Substrat wurde in einem UV-Reiniger (UVOH 150 LAB von FHR, Deutschland) für 3 Minuten gereinigt, mit Ethanol abgespült und in einem Stickstoffstrom getrocknet.

Ultraschallbehandlung: Alle Behandlungsschritte mit Ultraschall wurden in einer Elma Transsonic T310-Einheit für 3 Minuten durchgeführt.

Bildung der Monoschichten: Die Goldsubstrate wurden in eine 10 mM Lösung von 4'-Nitro-1,1'-biphenyl-4-thiol (NBPT, bezogen von Taros Chemicals) oder 1,1'-Biphenyl-4-thiol (BPT, bezogen von Platte Valley Scientific) in N,N-Dimethylformamid (DMF, p.a., bezogen von VWR, getrocknet mit 0,4 nm Molekularsieb) bei Raumtemperatur für 3 Tage eingetaucht. Anschließend wurde die Probe mit DMF abgespült und in DMF mit Ultraschall behandelt, mit Ethanol abgespült (p.a., bezogen von VWR) und abschließend in einen Stickstoffstrom getrocknet.

Elektronenexposition: Eine Flutkathode (Specs FG20) wurde zum Vernetzen verwendet. Die Elektronenexposition wurde im Hochvakuum (< 5·10⁻⁷ mbar) mit einer Elektronenenergie von 100 eV durchgeführt. Eine Elektronendosis von 20 mC/cm² wurde angewendet. Die Dosis wurde mit einem Faradayschen Becher in geringer Entfernung zu der Probe gemessen. Eine Kohlenstoff-Folie (Multi A, Quantifoil Micro Tools, Jena, Deutschland) mit kreisförmigen und elliptischen Öffnungen von 1 bis 8 µm auf einem Transmissionselektronenmikroskopgitter als Träger wurde als Schablonenmaske verwendet.

Thiolaustausch: Proben mit teilweise vernetzten Monoschichten von NBPT oder BPT wurden in eine 10 mM Lösung von BPT bzw. NBPT in trockenem DMF bei 55°C für 1 Stunde bis 3 Tage eingetaucht. Nach dem Abspülen mit DMF und Ultraschallbehandlung in DMF, gefolgt vom Abspülen mit Ethanol und abschließendem Trocknen in einem Stickstoffstrom, wurde die gesamte Probe 100 eV Elektronen mit einer Dosis von 40 mC/cm² ausgesetzt.

Derivatisierung: Monoschichten mit aminoterminierten Bereichen wurden in eine Lösung von 1,2-Dichlorethan (SPECTRANAL^{®}, ACS-Reagenz, bezogen von Sigma-Aldrich) mit 3,8 Vol.-% Pentansäurechlorid (bezogen von Sigma-Aldrich) und 1,3 Vol.-% N-Ethyl-N,N-diisopropylamin (bezogen von Sigma-Aldrich) für 2,5 Stunden eingetaucht. Danach wurden die Proben mit 1,2-Dichlorethan abgespült und in einen Stickstoffstrom getrocknet.

Röntgenphotoelektronenspektroskopie (XPS): XP-Spektren wurden mit einem Omicron Multiprobenspektrometer unter Verwendung von monochromatischer Al Kα Strahlung aufgenommen. Die Spektren wurden durch Einstellen des Au 4f Signals auf 84,0 eV kalibriert.

Rasterkraftmikroskopie (AFM): AFM-Bilder wurden mit einem NT-MDT Ntegra im Kontaktmodus unter Verwendung von Siliciumträgern mit einer Kraftkonstante von 0,1 N/m erhalten.

Die Herstellung einer vollständig vernetzten, chemisch gemusterten Monoschicht ist schematisch in den Figuren 1 und 2 dargestellt.

Im Verfahren gemäß Figur 2 wurde eine Monoschicht aus 4-Nitro-1,1'-biphenyl-4-thiol (NBPT) auf einer Goldoberfläche gebildet. Anschließend führte eine lokalisierte Exposition mit Elektronen zur intermolekularen Vernetzung und der Umwandlung der Nitrogruppen in Aminogruppen innerhalb der exponierten Bereiche. Beim Eintauchen des mit der Monoschicht beschichteten Substrates in eine Lösung von 1,1'-Biphenyl-4-thiol (BPT) in DMF wurden die NBPT-Moleküle in den nicht-vernetzten Bereichen durch BPT-Moleküle ersetzt, wodurch eine BPT-Monoschicht in diesem Bereich gebildet wurde. Eine Exposition mit Elektronen der gesamten Oberfläche resultierte in der Vernetzung der BPT-Monoschicht unter Bildung zusätzlicher Vernetzungen zwischen den Aminobereichen und den nicht-funktionalisierten BPT-Bereichen.

Alternativ wurde ein Muster gemäß dem Verfahren nach Figur 1 erhalten, wobei jedoch von BPT-Monoschichten ausgegangen wurde und BPT durch NBPT nach der ersten Elektronenexposition ausgetauscht wurde. Eine abschließende Elektronenexposition der gesamten Oberfläche resultierte in der Vernetzung der NBPT-Monoschichten und der Umwandlung der Nitrogruppen in Aminogruppen und der Verknüpfung der vernetzten aminoterminierten NBPT-Bereiche und der nicht-funktionalisierten BPT-Bereiche.

Die einzelnen Verfahrensschritte wurden jeweils durch Röntgenphotoelektronenspektroskopie (XPS) verfolgt, wobei festgestellt wurde, dass der Austausch der unvernetzten Aromaten um das etwa Dreifache schneller verläuft, wenn zunächst eine Monoschicht von NBPT erzeugt wurde und das unvernetzte NBPT durch BPT ersetzt wurde (Verfahren gemäß Figur 2), im Vergleich zum umgekehrten Verfahren, bei dem zunächst eine Monoschicht von BPT erzeugt wurde und das unvernetzte BPT durch NBPT ersetzt wurde (Verfahren gemäß Figur 1).

Die Struktur der erhaltenen Monoschichten mit einem Muster wurde durch Rasterkraftmikroskopie belegt. So wurde gezeigt, dass nach der Umsetzung der Aminogruppen mit Pentansäurechlorid unter Amidbildung die funktionalisierten Bereiche um etwa 10 Å höher liegen als die Oberfläche der benachbarten, nicht-funktionalisierten Bereiche.

## Patentansprüche

1. Strukturierte Monoschicht, die aus niedermolekularen Aromaten, ausgewählt aus der Gruppe, bestehend aus Phenyl, Biphenyl, Terphenyl, Naphthalin, Anthracen, Bipyridin, Terpyridin, Thiophen, Bithienyl, Terthienyl, Pyrrol und Kombinationen davon, aufgebaut und in lateraler Richtung vollständig vernetzt ist, wobei die Monoschicht auf einer der beiden Oberflächen ein Muster aus funktionellen Gruppen aufweist.

2. Strukturierte Monoschicht nach Anspruch 1, wobei die Monoschicht auf einer der beiden Oberflächen ein Muster aus Aminogruppen als funktionelle Gruppen aufweist.

3. Strukturierte Monoschicht nach Anspruch 1 oder 2, wobei die Oberfläche der Monoschicht, die kein Muster aus funktionellen Gruppen aufweist, über Ankergruppen kovalent an mindestens eine Oberfläche eines Substrates gebunden ist.

4. Strukturierte Monoschicht nach Anspruch 3, wobei das Substrat aus der Gruppe, bestehend aus Gold, Silber, Titan, Zirkonium, Vanadium, Chrom, Mangan, Wolfram, Molybdän, Platin, Aluminium, Eisen, Stahl, Silicium, Germanium, Indiumphosphid, Galliumarsenid, Siliciumnitrid und Oxiden oder Legierungen oder Mischungen derselben sowie Indium-Zinn-Oxid und Silikat- oder Boratgläsern, ausgewählt ist.

5. Strukturierte Monoschicht nach Anspruch 3 oder 4, wobei die Ankergruppen aus der Gruppe, bestehend aus Carboxy-, Thiol-, Trichlorsilyl-, Trialkoxysilyl-, Phosphonat-, Hydroxamsäure- und Phosphatgruppen, ausgewählt sind.

6. Strukturierte Monoschicht nach einem der Ansprüche 3 bis 5, wobei die Ankergruppen mit Hilfe eines Abstandshalters mit einer Länge von 1 bis zu 10 Methylengruppen an die in lateraler Richtung vernetzte, aus niedermolekularen Aromaten aufgebaute Monoschicht kovalent gebunden sind.

7. Verfahren zum Herstellen einer strukturierten Monoschicht, die aus Aromaten, ausgewählt aus der Gruppe, bestehend aus Phenyl, Biphenyl, Terphenyl, Naphthalin, Anthracen, Bipyridin, Terpyridin, Thiophen, Bithienyl, Terthienyl, Pyrrol und Kombinationen davon, aufgebaut und in lateraler Richtung vollständig vernetzt ist, wobei die Monoschicht auf einer der beiden Oberflächen ein Muster aus funktionellen Gruppen aufweist, wobei das Verfahren die Schritte umfasst:
(a) das Bereitstellen eines Substrates,
(b) gegebenenfalls das Modifizieren mindestens einer Oberfläche des Substrates,
(c) das Aufbringen einer Monoschicht aus niedermolekularen Aromaten unter Bindung über Ankergruppen auf mindestens eine, gegebenenfalls modifizierte Oberfläche des Substrates,
(d) das Behandeln des in Schritt (c) erhaltenen Substrates mit energiereicher Strahlung mittels Elektronenlithographie, Röntgenlithographie, EUV-Lithographie und/oder einer Nahsonde, dass die aus niedermolekularen Aromaten aufgebaute Monoschicht in lateraler Richtung in bestimmten Bereichen selektiv unter Ausbildung eines Musters vernetzt wird, wodurch eine Monoschicht mit vernetzten und unvernetzten Bereichen gebildet wird,
(e) das Behandeln des in Schritt (d) erhaltenen Substrates mit niedermolekularen Aromaten, die mindestens eine funktionelle Gruppe aufweisen, durch Tauch-, Gieß-, Spinschleuderverfahren oder durch Adsorption aus Lösung oder aus der Gasphase, dass ein Austausch der unvernetzten niedermolekularen Aromaten gegen niedermolekulare Aromaten, die mindestens eine funktionelle Gruppe aufweisen, stattfindet, und
(f) das Behandeln des in Schritt (e) erhaltenen Substrates mit energiereicher Strahlung derart, dass eine Vernetzung der ausgetauschten Aromaten, die mindestens eine funktionelle Gruppe aufweisen, untereinander sowie mit den in Schritt (d) vernetzten Aromaten stattfindet.

8. Verfahren zum Herstellen einer strukturierten Monoschicht, die aus niedermolekularen Aromaten, ausgewählt aus der Gruppe, bestehend aus Phenyl, Biphenyl, Terphenyl, Naphthalin, Anthracen, Bipyridin, Terpyridin, Thiophen, Bithienyl, Terthienyl, Pyrrol und Kombinationen davon, aufgebaut und in lateraler Richtung vollständig vernetzt ist, wobei die Monoschicht auf einer der beiden Oberflächen ein Muster aus funktionellen Gruppen aufweist, wobei das Verfahren die Schritte umfasst:
(a) das Bereitstellen eines Substrates,
(b) gegebenenfalls das Modifizieren mindestens einer Oberfläche des Substrates,
(c) das Aufbringen einer Monoschicht aus niedermolekularen Aromaten, die mindestens eine funktionelle Gruppe aufweisen, unter Bindung über Ankergruppen auf mindestens eine, gegebenenfalls modifizierte Oberfläche des Substrates,
(d) das Behandeln des in Schritt (c) erhaltenen Substrates mit energiereicher Strahlung mittels Elektronenlithographie, Röntgenlithographie, EUV-Lithographie und/oder einer Nahsonde, dass die aus niedermolekularen Aromaten aufgebaute Monoschicht in lateraler Richtung in bestimmten Bereichen selektiv unter Ausbildung eines Musters vernetzt wird, wodurch eine Monoschicht mit vernetzten und unvernetzten Bereichen gebildet wird,
(e) das Behandeln des in Schritt (d) erhaltenen Substrates mit niedermolekularen Aromaten durch Tauch-, Gieß-, Spinschleuderverfahren oder durch Adsorption aus Lösung oder aus der Gasphase, dass ein Austausch der unvernetzten niedermolekularen Aromaten, die mindestens eine funktionelle Gruppe aufweisen, gegen niedermolekulare Aromaten stattfindet, und
(f) das Behandeln des in Schritt (e) erhaltenen Substrates mit energiereicher Strahlung derart, dass eine Vernetzung der ausgetauschten Aromaten untereinander sowie mit den in Schritt (d) vernetzten Aromaten, die mindestens eine funktionelle Gruppe aufweisen, stattfindet.

9. Verfahren nach Anspruch 7 oder 8, wobei es sich bei dem Aromaten um Biphenyl handelt, das über eine Thiolgruppe als Ankergruppe an das Substrat kovalent gebunden wird.

10. Verfahren nach einem der Ansprüche 7 bis 9, wobei in Schritt (c) das Aufbringen durch Tauch-, Gieß-, Spinschleuderverfahren oder durch Adsorption aus Lösung durchgeführt wird.

11. Verfahren nach einem der Ansprüche 7 bis 10, welches nach Schritt (f) weiter den Schritt umfasst:
(g) das Entfernen des Substrates, um eine strukturierte Monoschicht zu erhalten, die nicht an ein Substrat gebunden vorliegt.

12. Verwendung der strukturierten Monoschicht nach einem der Ansprüche 1 bis 6 als Membran bzw. Nanosheet.

13. Verwendung der strukturierten Monoschicht nach einem der Ansprüche 1 bis 6 zur selektiven Anbindung von Nanoobjekten über die funktionellen Gruppen der Monoschicht.

## Claims

1. Structured monolayer, which is formed from low-molecular aromatics selected from the group consisting of phenyl, biphenyl, terphenyl, naphthalene, anthracene, bipyridine, terpyridine, thiophene, bithienyl, terthienyl, pyrrole and combinations thereof, and is fully crosslinked in lateral direction, wherein on one of the two surfaces the monolayer has a pattern composed of functional groups.

2. Structured monolayer according to claim 1, wherein on one of the two surfaces the monolayer has a pattern composed of amino groups as functional groups.

3. Structured monolayer according to claim 1 or 2, wherein the surface of the monolayer that has no pattern composed of functional groups is covalently bonded to at least one surface of a substrate by means of active groups.

4. Structured monolayer according to claim 3, wherein the substrate is selected from the group consisting of gold, silver, titanium, zirconium, vanadium, chromium, manganese, tungsten, molybdenum, platinum, aluminium, iron, steel, silicon, germanium, indium phosphide, gallium arsenide, silicon nitride and oxides or alloys or mixtures thereof as well as indium-tin oxide and silicate or borate glasses.

5. Structured monolayer according to claim 3 or 4, wherein the active groups are selected from the group consisting of carboxy, thiol, trichlorosilyl, trialkoxysilyl, phosphonate, hydroxamic acid and phosphate groups.

6. Structured monolayer according to one of claims 3 to 5, wherein the active groups are covalently bonded to the monolayer, which is crosslinked in lateral direction and formed from low-molecular aromatics, by means of a spacer with a length of 1 to 10 methylene groups.

7. Method for the production of a structured monolayer, which is formed from aromatics selected from the group consisting of phenyl, biphenyl, terphenyl, naphthalene, anthracene, bipyridine, terpyridine, thiophene, bithienyl, terthienyl, pyrrole and combinations thereof, and is fully crosslinked in lateral direction, wherein on one of the two surfaces the monolayer has a pattern composed of functional groups, wherein the method comprises the following steps:
(a) provision of a substrate,
(b) modification of at least one surface of the substrate, if necessary,
(c) application of a monolayer composed of low-molecular aromatics to at least one, possibly modified, surface of the substrate with bonding by means of active groups,
(d) treatment of the substrate obtained in step (c) with high-energy radiation by means of electron lithography, X-ray lithography, EUV lithography and/or a near field probe so that the monolayer formed from low-molecular aromatics is crosslinked in lateral direction in specific regions selectively with configuration of a pattern, as a result of which a monolayer with crosslinked and non-crosslinked regions is formed,
(e) treatment of the substrate obtained in step (d) with low-molecular aromatics, which have at least one functional group, by dip coating, casting, centrifugal spin coating methods or by adsorption from solution or from the gas phase so that an exchange of the non-crosslinked low-molecular aromatics for low-molecular aromatics having at least one functional group occurs, and
(f) treatment of the substrate obtained in step (e) with high-energy radiation such that the exchanged aromatics, which have at least one functional group, are crosslinked with one another and also with the aromatics crosslinked in step (d).

8. Method for the production of a structured monolayer, which is formed from low-molecular aromatics selected from the group consisting of phenyl, biphenyl, terphenyl, naphthalene, anthracene, bipyridine, terpyridine, thiophene, bithienyl, terthienyl, pyrrole and combinations thereof, and is fully crosslinked in lateral direction, wherein on one of the two surfaces the monolayer has a pattern composed of functional groups, wherein the method comprises the following steps:
(a) provision of a substrate,
(b) modification of at least one surface of the substrate, if necessary,
(c) application of a monolayer composed of low-molecular aromatics, which have at least one functional group, to at least one, possibly modified, surface of the substrate with bonding by means of active groups,
(d) treatment of the substrate obtained in step (c) with high-energy radiation by means of electron lithography, X-ray lithography, EUV lithography and/or a near field probe so that the monolayer formed from low-molecular aromatics is crosslinked in lateral direction in specific regions selectively with configuration of a pattern, as a result of which a monolayer with crosslinked and non-crosslinked regions is formed,
(e) treatment of the substrate obtained in step (d) with low-molecular aromatics by dip coating, casting, centrifugal spin coating methods or by adsorption from solution or from the gas phase so that an exchange of the non-crosslinked low-molecular aromatics, which have at least one functional group, for low-molecular aromatics occurs, and
(f) treatment of the substrate obtained in step (e) with high-energy radiation such that the exchanged aromatics are crosslinked with one another and also with the aromatics crosslinked in step (d), which have at least one functional group.

9. Method according to claim 7 or 8, wherein the aromatic is biphenyl, which is covalently bonded to the substrate by means of a thiol group as anchor group.

10. Method according to one of claims 7 to 9, wherein in step (c) the application is conducted by dip coating, casting, centrifugal spin coating methods or by adsorption from solution.

11. Method according to one of claims 7 to 10, which after step (f) further comprises the following step:
(g) removal of the substrate in order to obtain a structured monolayer, which is not bonded to a substrate.

12. Use of the structured monolayer according to one of claims 1 to 6 as membrane or nanosheet.

13. Use of the structured monolayer according to one of claims 1 to 6 for the selective attachment of nano objects by means of the functional groups of the monolayer.

## Revendications

1. Monocouche structurée qui est formée de composés aromatiques de faible poids moléculaire choisis parmi le groupe constitué de phényle, diphényle, terphényle, naphtaline, anthracène, bipyridine, terpyridine, thiophène, bithiényle, terthiényle, pyrrole et des combinaisons de ceux-ci, et qui est complètement réticulée en direction latérale, la monocouche comportant sur l'une des deux faces un motif formé de groupements fonctionnels.

2. Monocouche structurée selon la revendication 1, la monocouche comportant sur l'une des deux faces un motif formé de groupements fonctionnels amino.

3. Monocouche structurée selon la revendication 1 ou 2, la face de la monocouche, qui ne comporte pas de motif formé de groupements fonctionnels, est liée de façon covalente par des groupements actifs à au moins une surface d'un substrat.

4. Monocouche structurée selon la revendication 3, le substrat étant choisi parmi le groupe constitué par l'or, l'argent, le titane, le zirconium, le vanadium, le chrome, le manganèse, le tungstène, le molybdène, le platine, l'aluminium, le fer, l'acier, le silicium, le germanium, le phosphure d'indium, l'arséniure de gallium, nitrure de silicium et les oxydes ou alliages ou mélanges de ceux-ci ainsi que l'oxyde d'indium-étain et les verres de silicate ou borate.

5. Monocouche structurée selon la revendication 3 ou 4, les groupements actifs étant choisis parmi le groupe constitué par les groupements carboxy, thiol, trichlorosilyl, trialkoxysilyl, phosphonate, acide hydroxamique et phosphate.

6. Monocouche structurée selon l'une des revendications 3 à 5, les groupements actifs étant liés par l'intermédiaire de groupements entretoises d'une longueur de 1 à 10 groupements méthylènes de façon covalente à la monocouche formée de composés aromatiques de faible poids moléculaire, réticulée en direction latérale.

7. Procédé pour la fabrication d'une monocouche structurée qui est formée de composés aromatiques choisis parmi le groupe constitué de phényle, diphényle, terphényle, naphtaline, anthracène, bipyridine, terpyridine, thiophène, bithiényle, terthiényle, pyrrole et des combinaisons de ceux-ci, et qui est complètement réticulée en direction latérale, la monocouche comportant sur l'une des deux faces un motif formé de groupements fonctionnels, le procédé comportant les étapes suivantes :
(a) la mise à disposition d'un substrat,
(b) éventuellement la modification d'au moins une surface du substrat,
(c) l'application sur au moins une surface éventuellement modifiée du substrat d'une monocouche formée de composés aromatiques de faible poids moléculaire en la liant par l'intermédiaire de groupements actifs,
(d) le traitement du substrat obtenu à l'étape (c) avec un rayonnement de haute énergie moyennant une lithographie à faisceau d'électrons, une lithographie à rayons X, une lithographie EUV et/ou une sonde rapprochée, de sorte que la monocouche formée de composés aromatiques de faible poids moléculaire réticule latéralement sélectivement dans certaines zones tout en formant un motif, générant ainsi une monocouche comportant des zones réticulées et des zones non-réticulées,
(e) le traitement du substrat obtenu à l'étape (d) avec des composés aromatiques de faible poids moléculaire qui comportent au moins un groupement fonctionnel, moyennant un procédé d'immersion, de coulage, de rotomoulage ou par absorption à partir d'une solution ou d'une phase gazeuse, de telle sorte que les composés aromatiques à faible poids moléculaire non-réticulés sont remplacés par des composés aromatiques à faible poids moléculaire qui comportent au moins un groupement fonctionnel, et
(f) le traitement du substrat obtenu à l'étape (e) avec un rayonnement de haute énergie de telle sorte que se produise une réticulation des composés aromatiques de remplacement qui comportent au moins un groupement fonctionnel, entre eux ainsi qu'avec les composés aromatiques réticulés à l'étape (d).

8. Procédé pour la fabrication d'une monocouche structurée qui est formée de composés aromatiques à faible poids moléculaire, choisis parmi le groupe constitué de phényle, diphényle, terphényle, naphtaline, anthracène, bipyridine, terpyridine, thiophène, bithiényle, terthiényle, pyrrole et des combinaisons de ceux-ci, et qui est complètement réticulée en direction latérale, la monocouche comportant sur l'une des deux faces un motif formé de groupements fonctionnels, le procédé comportant les étapes suivantes :
(a) la mise à disposition d'un substrat,
(b) éventuellement la modification d'au moins une surface du substrat,
(c) l'application d'une monocouche formée de composés aromatiques de faible poids moléculaire, qui comportent au moins un groupement fonctionnel, en la liant par l'intermédiaire de groupements actifs sur au moins une surface éventuellement modifiée du substrat,
(d) le traitement du substrat obtenu à l'étape (c) avec un rayonnement de haute énergie moyennant une lithographie à faisceau d'électrons, une lithographie à rayons X, une lithographie EUV et/ou une sonde rapprochée, de sorte que la monocouche formée de composés aromatiques de faible poids moléculaire réticule latéralement sélectivement dans certaines zones tout en formant un motif, générant ainsi une monocouche comportant des zones réticulées et des zones non-réticulées,
(e) le traitement du substrat obtenu à l'étape (d) avec des composés aromatiques de faible poids moléculaire moyennant un procédé d'immersion, de coulage, de rotomoulage ou par absorption à partir d'une solution ou d'une phase gazeuse, de telle sorte que les composés aromatiques à faible poids moléculaire non-réticulés comportant au moins un groupement fonctionnel sont remplacés par des composés aromatiques à faible poids moléculaire, et
(f) le traitement du substrat obtenu à l'étape (e) avec un rayonnement de haute énergie de telle sorte que se produise une réticulation des composés aromatiques de remplacement entre eux ainsi qu'avec les composés aromatiques réticulés à l'étape (d) qui comportent au moins un groupement fonctionnel.

9. Procédé selon la revendication 7 ou 8, le composé aromatique étant du diphényle qui est lié de façon covalente au substrat par l'intermédiaire d'un groupement thiol servant de groupement actif.

10. Procédé selon l'une des revendications 7 à 9, l'application à l'étape (c) étant effectuée moyennant un procédé d'immersion, de coulage, de rotomoulage ou par absorption à partir d'une solution ou d'une phase gazeuse.

11. Procédé selon l'une des revendications 7 à 10, comportant, après l'étape (f), l'étape suivante :
(g) le retrait du substrat afin d'obtenir une monocouche structurée qui n'est pas liée à un substrat.

12. Utilisation de la monocouche structurée selon l'une des revendications 1 à 6 comme membrane ou nanofeuille (nanosheet).

13. Utilisation de la monocouche structurée selon l'une des revendications 1 à 6 pour la liaison sélective de nano-objets par l'intermédiaire des groupements fonctionnels de la monocouche.
